(19) Europäisches Patentamt
European Patent Office
Office européen des brevets

(11) **EP 2 005 209 B1**

(12) **EUROPÄISCHE PATENTSCHRIFT**

(45) Veröffentlichungstag und Bekanntmachung des Hinweises auf die Patenterteilung:
**18.12.2013   Patentblatt 2013/51**

(51) Int Cl.:
**G01S 7/35** (2006.01)   **G01S 3/74** (2006.01)
**G01S 13/44** (2006.01)   **G01S 13/34** (2006.01)
**G01S 13/93** (2006.01)

(21) Anmeldenummer: 07723389.8

(22) Anmeldetag: **19.03.2007**

(86) Internationale Anmeldenummer:
**PCT/EP2007/002422**

(87) Internationale Veröffentlichungsnummer:
**WO 2007/115650 (18.10.2007 Gazette 2007/42)**

(54) **VORRICHTUNG UND VERFAHREN ZUR ERFASSUNG EINES ODER MEHRERER OBJEKTE IN DER UMGEBUNG EINES FAHRZEUGES**

DEVICE AND METHOD FOR DETECTING ONE OR MORE OBJECTS IN THE ENVIRONMENT OF A VEHICLE

PROCÉDÉ ET DISPOSITIF DE SAISIE D'UN OU DE PLUSIEURS OBJETS DANS L'ENVIRONNEMENT D'UN VÉHICULE À MOTEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.03.2006   DE 102006015445**
**31.03.2006   DE 102006015446**
**21.11.2006   DE 102006054721**

(43) Veröffentlichungstag der Anmeldung:
**24.12.2008   Patentblatt 2008/52**

(73) Patentinhaber: **Volkswagen Aktiengesellschaft**
**38440 Wolfsburg (DE)**

(72) Erfinder:
• **MEINECKE, Marc-Michael**
**38524 Sassenburg (DE)**
• **BEHRENS, Marc**
**38154 Königslutter (DE)**
• **MENDE, Ralph**
**38108 Braunschweig (DE)**
• **KOELEN, Christian Dr.**
**74321 Bietigheim-Bissingen (DE)**
• **TEUBNER, Tobias**
**38162 Cremlingen (DE)**

(56) Entgegenhaltungen:
EP-A- 1 580 572          DE-A1- 10 050 278
DE-A1-102004 044 330     DE-A1-102005 031 618
US-A1- 2001 015 698      US-A1- 2006 028 375
US-B1- 6 498 581

**Beschreibung**

Die Erfindung betrifft ein Verfahren zur Erfassung mindestens eines Objektes in der Umgebung eines Fahrzeuges nach dem Oberbegriff des Anspruchs 1. Ferner betrifft die Erfindung eine Vorrichtung zur Durchführung eines solchen Verfahrens.

In zukünftigen Fahrerassistenzsystemen wird elektronischen Sicherheits- und Komfortfunktionen eine große Bedeutung zukommen. Die Basis für die Realisierung solcher Systeme stellt die Sensorik dar, die es ermöglicht, die Fahrumgebung eines Fahrzeuges wahrzunehmen. Insbesondere für Fahrerassistenzsysterne, die eine Spurhatte- und/oder Spurwechselassistenzfunktion und/oder eine Abstands- bzw. Geschwindigkeitsregelung umfassen, ist es erforderlich, Objekte in der Umgebung des Fahrzeuges zu erfassen.

Bislang gibt es im automotiven Bereich Radarsensoren zur Winkelmessung, die aus einer Sende- und zwei Empfangsantennen bestehen. Ein derartiger Sensor ist beispielsweise in der DE 10 2004 044 073 A1 beschrieben. In diesem Falle trifft eine an Objekten reflektierte Wellenfront auf den Radarsensor auf. Durch die unterschiedlichen Ankunftszeiten der Welle an den beiden Empfangsantennen kann auf den Ankunftswinkel geschlossen werden, so z.B. durch den Vergleich von Phasenwerten (Phasenmonopuls-Konzept) oder durch Zeitdifferenzmessung. Eine korrekte Winkelmessung ist aber nur in dem Falle möglich, wenn es in einer bestimmten Auflösungszelle in Entfernungs- und Geschwindigkeitskomponenten nur ein vom Radar bestrahltes Objekt gibt. Bei mehreren Objekten im gleichen Entfernungstor führt die Winkelmessung zu falschen Ergebnissen.

Des Weiteren liefern heutige Radarsensoren nicht die nötige Auflösung (Trennfähigkeit) für sicherheitsrelevante Anwendungen, wie beispielsweise Pre-Crash (vorausschauende Kollisionsvermeidung) und Stadtsituationen (City-ACC).

Zukünftige Anwendungen im Sicherheitsbereich benötigen eine präzisere Wahrnehmung der Fahrzeugumgebung. Deshalb werden Radarsensoren benötigt, welche insbesondere die Objektwinkel besser auflösen können. Die Herausforderung besteht in der Entwicklung entsprechender Radarsensoren, die mit wenig Platz auskommen. Eine Verbesserung der Entfernungstrennfähigkeit bzw. der Geschwindigkeitstrennfähigkeit kommt in Zukunft ebenfalls eine große Bedeutung zu.

Aus der EP 1 580 572 A1 ist ein Verfahren nach dem Oberbegriff des Anspruchs 1 bekannt. Weitere Verfahren zum Erfassen von Objekten sind aus der US 2006/0028375 A1, der US 2001/0015698 A1 und der US 6,498,581 B1 bekannt.

Der Erfindung liegt die Aufgabe zugrunde, ein verbessertes Verfahren und eine verbesserte Vorrichtung zur Erfassung mindestens eines Objektes in der Umgebung eines Fahrzeuges zu schaffen. Diese Aufgabe wird durch die in den Ansprüchen angegebenen Merkmale der Erfindung gelöst.

Bei dem erfindungsgemäßen Verfahren wird anhand von Abtastwerten von mehr als zwei Empfangsantennen bestimmt, ob eine Einzielsituation oder einer Mehrzielsituation vorliegt. Danach wird eine Zielwinkelbestimmung durchgeführt, die davon abhängt, ob eine Einzielsituation oder eine Mehrzielsituation vorliegt. Bei bekannten im automotiven Bereich verwendeten Radarsensoren wird bei der Signalauswertung nicht berücksichtigt, ob eine Einziel- oder eine Mehrzielsituation vorliegt. Zumeist wird eine Einzielsituation unterstellt, so dass die darauf folgende Zielwinkelbestimmung zu Fehlem führen kann, wenn eine Mehrzielsituation vorliegt. Derartige Fehler können z. B. bei der vorausschauenden Kollisionsvermeidung sehr gefährlich sein. Sie können mit dem erfindungsgemäßen Verfahren vermieden werden.

Das erfindungsgemäße Verfahren ist dadurch gekennzeichnet, dass die Abtastwerte von jeder Empfangsantenne in das Frequenzspektrum abgebildet werden, dass ein Maximalwert eines Frequenzspektrums einer Empfangsantenne oder ein Maximalwert einer Kombination der Frequenzspektren der Empfangsantennen bestimmt wird, dass die Frequenzwerte der Frequenzspektren der Empfangsantennen bei diesem Maximum einer Fast-Fourier-Transformation unterzogen werden und anhand eines Vergleichs der Phasen der Empfangsantennen bei einem Maximalwert des sich aus der Fast-Fourier-Transformation ergebenden Spektrums bestimmt wird, ob eine Einzelsituation oder eine Mehrzielsituation vorliegt.

Vorzugsweise werden bei dem erfindungsgemäßen Verfahren die Abtastwerte von vier Empfangstennen verwendet. Radarsensoren vermessen Objekte in der Umgebung um das Fahrzeug. Dabei werden zukünftig hochauflösende Sensoren verwendet. Hochauflösende Signalverarbeitungsverfahren erfordern allerdings die Angabe der Anzahl der Ziele im vorhinein. Das erfindungsgemäße Verfahren bestimmt oder schätzt die Anzahl der Ziele (Objekte), so dass der Winkel, in dem sich die Objekte befinden (DOA, Direction Of Arrival), z. B. mittels der Methoden der hoch auflösenden Spektralanalyse wie z.B. MUSIC (Multiple Signal Classification) bestimmt werden kann. Die Möglichkeit, sich solcher Methoden zu bedienen, wird durch die Verwendung von vier Empfangsantennen eröffnet, da hierdurch mehrere (vorzugsweise bis zu drei) Objekte im gleichen Entfernungstor im Winkel bestimmt werden können. Um den Winkel, in dem sich die Objekte befinden (DOA, Direction Of Arrival) zu bestimmen, werden räumliche Abtastwerte von den 4 Antennen genommen und diese mittels der Frequenzauswertetechnik MUSIC (MUltiple Signal Classification) verarbeitet, um so Rückschlüsse auf den Azimutwinkel zu ziehen. Alternativ zu MUSIC sind auch Digital Beamforming (DBF, CBF) oder ESPRIT oder andere geeignete Techniken einsetzbar.

Die hoch auflösende DOA (Direction Of Arrival) Schätztechnik, die auch Superresolutionstechnik genannt wird, wird zwar in der Luftraumüberwachung angewandt. Bei diesen Anwendungen bestehen die verwendeten Antennen-Arrays jedoch aus Tausenden von Einzelantennen und nehmen so viel Platz in Anspruch. Im Gegensatz dazu ist der verfügbare Platz im Fahrzeug auf weniger als ca. 10cm*10cm beschränkt. Entsprechend wenige Antennen können in einem solchen Radarsensor untergebracht werden.

Bei dem erfindungsgemäßen Verfahren werden insbesondere die Abtastwerte von jeder Empfangsantenne im Frequenzspektrum abgebildet, so dass jeder diskrete Wert im Frequenzspektrum eine Entfernungs-/Geschwindigkeitszelle bzw. ein Entfernungs-/Geschwindigkeitsfenster repräsentiert, und die Spitzen an einem diskreten Wert im Frequenzspektrum werden als Indikator für ein oder mehrere Ziele in der zugehörigen Entfernungs-/Geschwindigkeitszelle verwendet. Für das Ziel bzw. die Ziele in dieser Entfernungs-/Geschwindigkeitszelle wird dann bestimmt, ob eine Einzielsituation oder eine Mehrzielsituation vorliegt.

Zur Unterscheidung zwischen einer Einzielsituation und einer Mehrzielsituation kann gemäß einem Ausführungsbeispiel der Erfindung die Differenz der Amplitudenwerte benachbarter Empfangsantennen bestimmt werden und auf eine Einzielsituation geschlossen werden, wenn die Differenzen jeweils gleich sind, und bei höheren Varianzwerten auf eine Mehrzielsituation geschlossen werden. Alternativ oder zusätzlich kann die Differenz der Phasenwerte benachbarter Empfangsantennen bestimmt werden und auf eine Einzielsituation geschlossen werden, wenn die Differenzen jeweils gleich sind, und bei höheren Varianzwerten auf eine Mehrzielsituation geschlossen werden. Ferner können alternativ oder zusätzlich die Autokovarianzmatrix der räumlichen Abtastwerte der Empfangsantennen und die Eigenwerten dieser Autokovarianzmatrix berechnet werden und anhand der Größe der Eigenwerte zwischen einer Einzielsituation und einer Mehrzielsituation unterschieden werden.

Mit dem erfindungsgemäßen Verfahren ist eine stabile Schätzung der Anzahl der Ziele (Objekte) möglich. Insbesondere dient die ermittelte Anzahl der Ziele (Objekte) als Eingabewert für einen hochauflösenden Algorithmus.

Die erfindungsgemäße Vorrichtung ist zur Durchführung des vorstehend beschriebenen Verfahrens ausgebildet. Sie umfasst mindestens einen Radarsensor mit mindestens einer Sendeantenne und mehreren Empfangsantennen, wobei vorzugsweise vier Empfangsantennen vorgesehen sind. Radarsensoren vermessen Objekte in der Szene ums Fahrzeug herum. Um hochauflösende Verfahren anwenden zu können, werden mehr als zwei Empfangsantennen benötigt. Mit den vier Empfangsantennen können bis zu drei Objekte im Winkel aufgelöst werden. Es hat sich herausgestellt, dass es bei einem Automobil besonders bevorzugt ist, vier Empfangsantennen zu verwenden, die drei Zielobjekte im Winkel auflösen können, da sich herausgestellt hat, dass eine Auflösung von nur zwei Zielobjekten für eine vorausschauende Kollisionsvermeidung nicht ausreicht. Ferner hat sich herausgestellt, dass die Verarbeitung der Signale von vier Empfangsantennen im Automobil zuverlässig und ohne einen zu großen Aufwand durchgeführt werden kann.

Die mindestens eine Sende- und die bevorzugt vier Empfangsantennen sind beispielsweise auf einem planaren Substrat angebracht (Patchantenne). Die Größe des planaren Substrats ist bevorzugt geringer als 100 cm$^2$. Bei einer derartigen Größe lässt sich eine ausreichend gute Auflösung der Zielobjekte erzielen. Andererseits ist der Platzbedarf für die Vorrichtung im Fahrzeug nicht zu groß.

Die Sendeantenne wird bevorzugt aus einer Matrix aus 6 x 8 Elementen gebildet. Eine Empfangsantenne wird bevorzugt aus 2 x 8 Elementen gebildet. Entsprechend ergibt sich bei der Verwendung von vier Empfangsantennen eine Matrix aus 4 x 2 x 8 Elementen. Die Anzahl der so genannten Patchreihen der Sendeantenne kann auch mehr oder weniger als die sechs Reihen der Sendeantenne des vorliegenden Ausführungsbeispiels umfassen. Eine gerade Anzahl an Patchreihen ist jedoch aus Symmetriegründen bevorzugt. Ferner ist eine höhere Anzahl der Patchreihen bevorzugt, da die emittierte Strahlung stärker gebündelt ist. Für die Empfangsantennen sind jedoch wie bei dem vorliegenden Ausführungsbeispiel zwei Patchreihen sehr günstig, da sich in diesem Fall die Richtwirkung des Einzelstrahlers mit dem Abstand der Empfangsantennen gut kombinieren lässt. Bei drei oder mehr Patchreihen der Empfangsantenne würde der Antennenabstand steigen und damit die Eindeutigkeit der Winkelmessung bzw. der Winkelmessbereich sinken.

Der Radarsensor arbeitet vorzugsweise mit einer Sendefrequenz im Bereich bei 5,8 GHz, 24 GHz, 26,5 GHz, 60 GHz, 77 GHz, 79 GHz. Der Radarsensor arbeitet bevorzugt mit einer Sendefrequenz von 24 GHz und strahlt ein frequenzmoduliertes Sendesignal aus, wobei mindestens zwei, beispielsweise drei verwobene frequenzmodulierte Signale enthalten sind. Das Sendesignal ist insbesondere ein LFMSK (Linear Frequency Modulated Shift Keying) Signal.

Fig. 1 zeigt die Sendeantenne und die Empfangsantennen eines Ausführungsbeispiels der erfindungsgemäßen Vorrichtung,

Fig. 2 zeigt die Antennenfiguration der in Fig. 1 gezeigten Antennen,

Fig. 3 zeigt die Mikrostruktur des Sendesignals,

Fig. 4 zeigt die Empfangskeulencharakteristik der vier Empfangsantennen,

Fig. 5 zeigt die Sendekeulencharakteristik der Sendekeule,

Fig. 6 zeigt die Definition der Schnittebenen der Richtcharakteristik,

Fig. 7 zeigt die auf die vier Empfangsantennenelemente einfallende Wellenfront sowie einen korrespondierenden räumlichen Schnappschuss und Zeitsignale für eine Einzelsituation;

Fig. 8   zeigt eine Darstellung wie in Fig. 7, bei der zusätzlich eine Zweizielsituation dargestellt ist,

Fig. 9   zeigt die Eigenwertverteilung der Autokovarianzmatrix für eine Einzelsituation und eine Zweizielsituation,

Fig. 10   zeigt ein Beispiel der Anordnung der erfindungsgemäßen Vorrichtung relativ zu zwei Zielen in gleicher radialer Distanz,

Fig. 11   zeigt die Amplituden der einzelnen Empfangsantennen für eine Einzelsituation und eine Zweizielsituation,

Fig. 12   zeigt die Phasen der einzelnen Empfangsantennen für eine Einzelsituation und eine Zweizielsituation und

Fig. 13   zeigt eine Anordnung, anhand derer ein weiteres Beispiel für ein Verfahren zum Unterscheiden zwischen einer Einzelsituation und einer Mehrzielsituation erläutert wird.

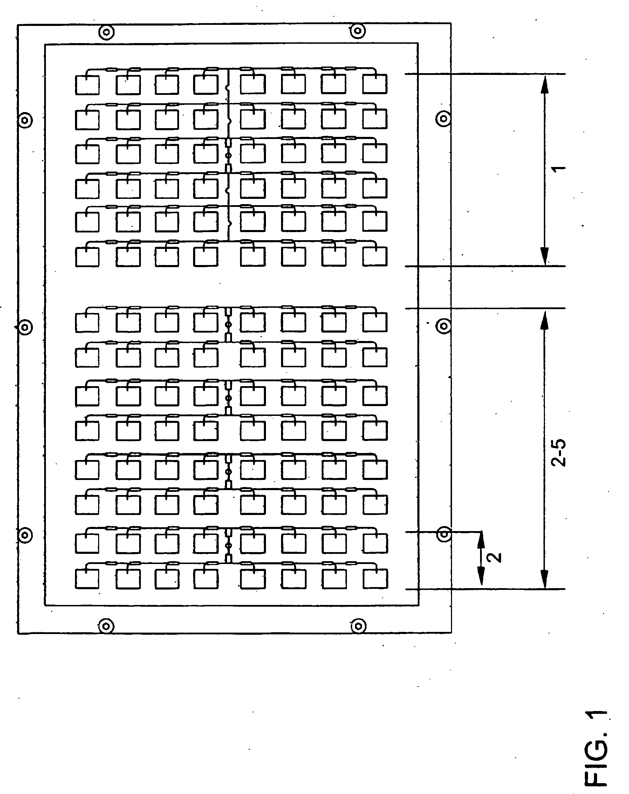

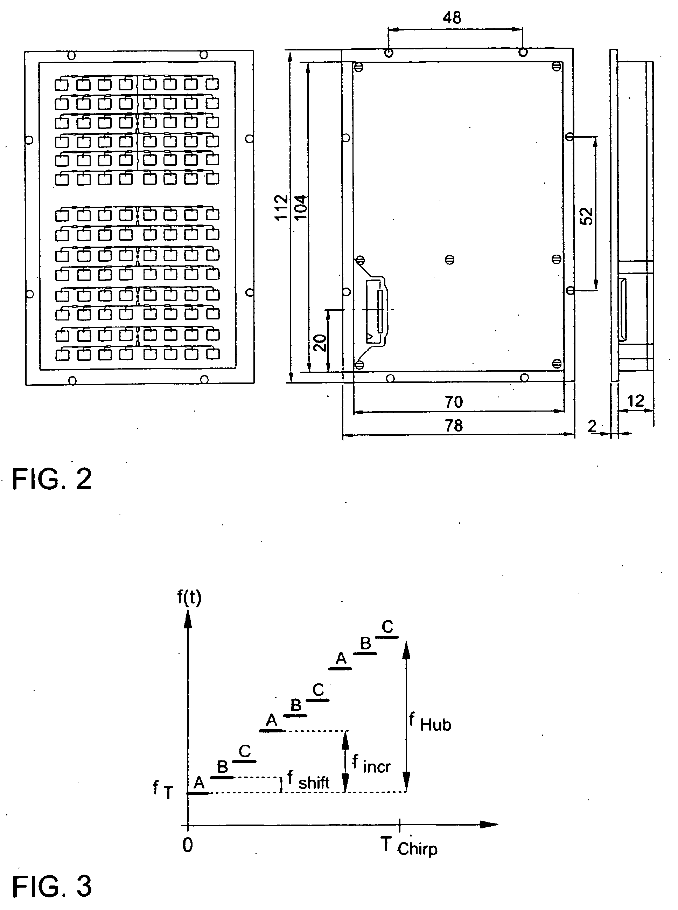

Die in Fig. 1 und Fig. 2 dargestellte Antennenkonfiguration umfasst eine Sendeantenne 1 mit einer schmalen Antennencharakteristik und vier Empfangsantennen 2 bis 5. Die Sendeantenne 1 wird beispielsweise aus einer Matrix aus 6 x 8 Elementen gebildet. Eine gerade Anzahl der Patchreihen ist hier aus Symmetriegründen bevorzugt. Eine Empfangsantenne 2 wird bevorzugt aus 2 x 8 Elementen gebildet. Entsprechend ergibt sich bei der Verwendung von vier Empfangsantennen 2 bis 5 eine Matrix aus 8 x 8 Elementen.

Der Radarsensor arbeitet mit einer Sendefrequenz im Bereich 5,8 GHz, 24 GHz, 26,5 GHz, 60 GHz, 79 GHz, insbesondere mit einer Sendefrequenz von 24 GHz. Er strahlt vorzugsweise ein LFMSK (Linear Frequency Modulated Shift Keying) Signal aus. Er erfüllt somit die Frequenzregulierung für Schmalbandsysteme.

Das verwendete LFMSK (Linear Frequency Modulated Shift Keying) Sendesignal ist ein stufenweise (insbesondere 512 Stufen) frequenzmoduliertes Sendesignal, wobei drei verwobene frequenzmodulierte Signale enthalten sind. Das Sendesignal setzt sich vorzugsweise aus alternierenden Up- und Down Chirps zusammen, dessen Mikrostruktur in Fig. 3 zu sehen ist. Elektromagnetische Wellen werden ausgesendet, an Objekten reflektiert und fallen dann auf die vier Empfangsantennen 2 bis 5 ein.

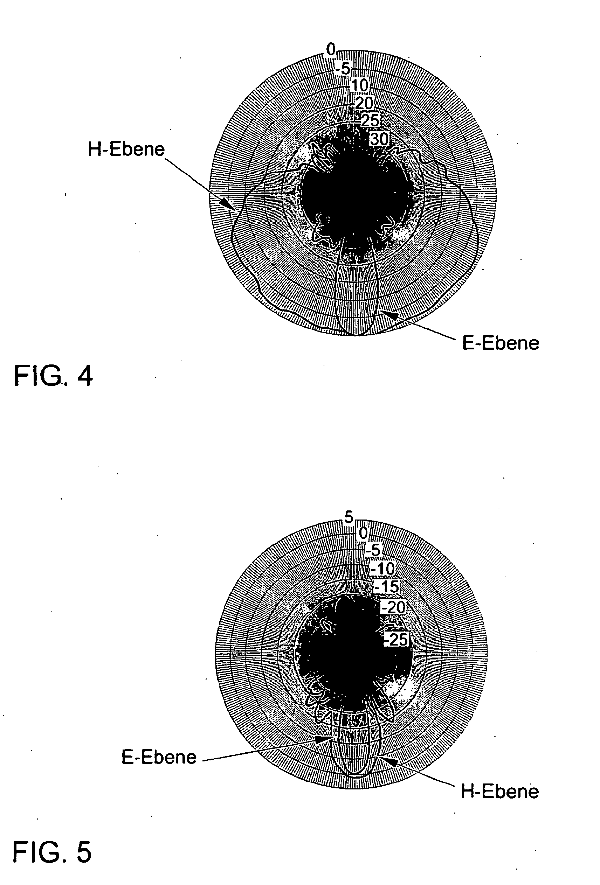

In Fig. 4 ist eine beispielhafte Empfangskeulencharakteristik der vier Empfangsantennen 2 bis 5 dargestellt. Die vier Empfangsantennen 2 bis 5 sind auf Gleichlauf normiert, so dass die Phasen- und Amplitudenunterschiede zwischen den einzelnen Empfangsantennen Einziel- oder Mehrzielsituationen anzeigen können. Für die Amplituden ist ein solcher Gleichlauf immer gegeben, für die Phasen ist hierzu eine räumliche Fourier-Transformation durchzuführen, woraus Angaben für die Welligkeit der Phasen gewonnen werden können. Für den Gleichlauf der Phasen ist dann zu unterscheiden, ob die Empfangsantennen äquidistant angeordnet sind oder nicht. Der erste Fall der äquidistanten Abstände ist bevorzugt. Falls nicht äquidistante Abstände vorliegen, muss die Normierung der Phasen auf Gleichlauf gesondert durchgeführt werden.

In Fig. 5 ist eine beispielhafte Sendekeulencharakteristik der mindestens einen Sendeantenne 1 dargestellt.

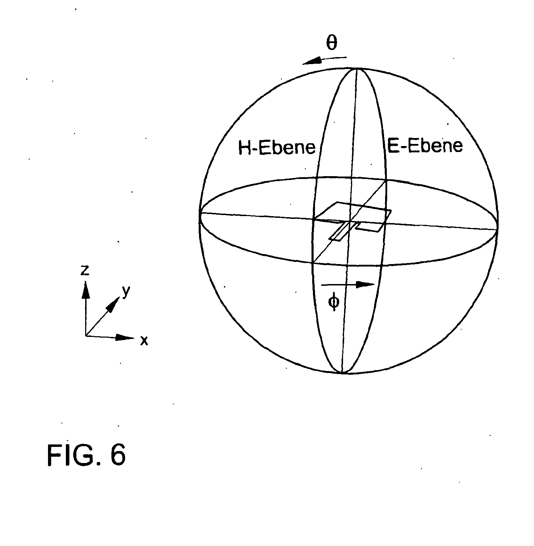

In Fig. 6 sind die Schnittebenen der Richtcharakteristik definiert. Werden die Schnittebenen der Richtcharakteristik graphisch dargestellt, erhält man das Richtdiagramm bzw. Strahlungsdiagramm. Schnitte durch die E-Ebene bzw. durch die H-Ebene werden speziell Vertikal- und Horizontaldiagramm genannt, d.h. die E-Ebene ist die Vertikalebene und die H-Ebene ist die Horizontalebene.

Das an den vier Antennen 2 bis 5 empfangene Signal wird jeweils mit dem Sendesignal ins Basisband abgemischt. Nach einer Tiefpassfilterung wird das Basisbandsignal von jeder Antenne abgetastet. Das Basisbandsignal jedes Up- bzw. Down-Chirps wird beispielsweise 512-fach komplex abgetastet. Diese 512 Abtastwerte werde mittels einer FFT (Fast-Fourier-Transformation) Operation ins Frequenzspektrum abgebildet. Dem LFMSK Prinzip entsprechend repräsentiert jeder diskreter FFT Wert eine Entfernungs-/Geschwindigkeitszelle (ein Entfernungs-/Geschwindigkeitsfenster). Gibt es eine Amplitudenspitze an einem diskreten FFT Wert, ist dies ein Indikator für ein oder mehrere Ziele in dieser Entfernungs-/Geschwindigkeitszelle. D.h. die Frequenzspitzen in den FFT Spektren sind Indikatoren für das Vorhandensein von Ein- bzw. Mehrzielsituationen. Bei einer Einzelsituation und einer Mehrzielsituation liegen pro Peak der Fast-Fourier-Transforrnation ein Ziel oder mehrere Ziele vor. Im Frequenzspektrum können aber gleichzeitig noch andere Ziele bei anderen Frequenzpositionen vorliegen.

Wenn eine solche Ein- oder Mehrzielsituationen bestimmt worden ist, verbleibt die Aufgabe, die Anzahl der Ziele in der entsprechenden Entfernungs-/ Geschwindigkeitszelle zu bestimmen sowie deren Winkelpositionen.

Im Folgenden wird erläutert wie bei dem erfindungsgemäßen Verfahren unterschieden wird, ob eine Einzelsituation oder eine Mehrzielsituation vorliegt.

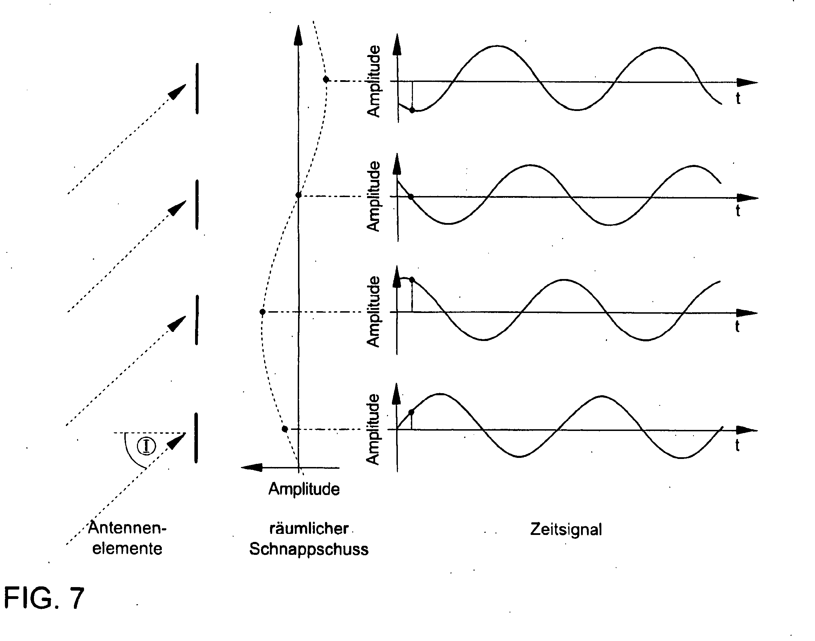

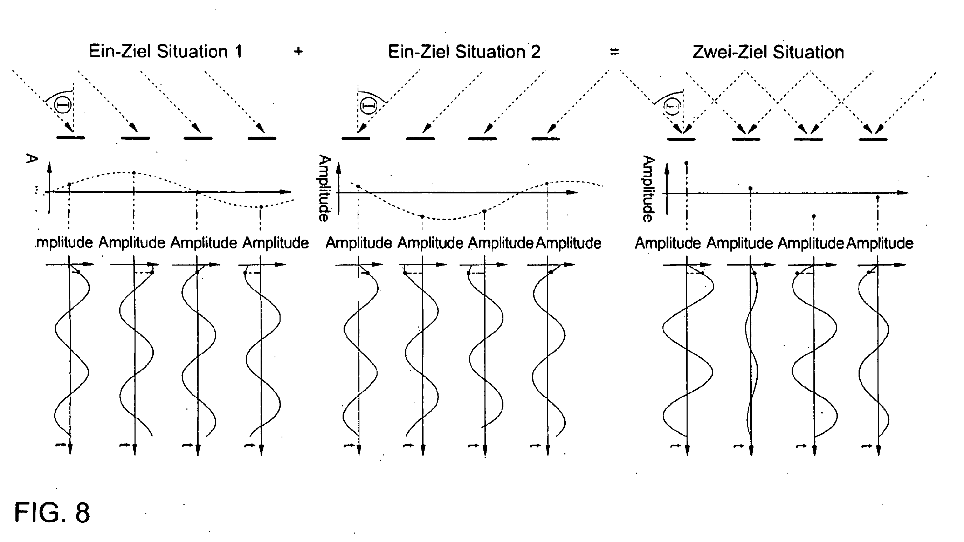

In Fig. 7 sind die auf vier Antennenelemente 2 bis 5 einfallende Wellenfront, ein korrespondierender räumlicher Schnappschuss und Zeitsignale für eine Einzielsituation dargestellt. In Fig. 8 ist zusätzlich eine Zweizielsituation dargestellt. In den Fig. 7 und 8 ist das abgemischte und tiefpassgefilterte Signal von jeder Antenne 2 bis 5 in der Zeitdomäne dargestellt. In den Fig. 7 und 8 ist somit ein gefiltertes Zeitsignal gezeigt, wobei der Durchlassbereich des Filters bei der gewünschten Frequenz liegt. Die gemessenen Phasenwerte zu einem bestimmten Zeitpunkt sind markiert. Die Verteilung der Phasenwerte über die vier Antennen 2 bis 5 wird auch räumlicher Schnappschuss genannt. Er enthält Informationen über die Winkelpositionen der detektierten Objekte. In dem Beispiel in Fig. 7 wird ein Objekt in einem Winkel Θ repräsentativ dargestellt.

Diese räumliche Frequenz $f_s$ hängt vom Winkel Θ bzw. der DOA ab, wie folgende Gleichung ausdrückt:

$$f_s = \frac{d * \sin\theta}{\lambda}$$, wobei λ die Wellenlänge der einfallenden Wellenfront ist und d der Abstand zwischen benachbarten Antennen 2 bis 5.

Es gibt mehrere Frequenz-Schätzmethoden, um die räumliche Frequenz zu schätzen. Einer dieser Methoden ist MUSIC (MUltiple Signal Classification) und wird im Folgenden kurz beschrieben.

Es wird angenommen, dass die komplexen (räumlichen) Abtastwerte Realisierungen von Zufallsvariablen sind, die den Bedingungen der Stationarität zweiter Ordnung genügen. Es wird eine bestimmte Anzahl von räumlichen Realisierungen (Abtastwerten) gewählt und von jeder räumlichen Realisierung die Autokovarianzmatrix berechnet. Diese werden aufaddiert und ergeben die Matrix R. Von der Matrix R werden dann die Eigenvektoren mit ihren Eigenwerten berechnet. Abhängig von der Amplitude der Eigenwerte werden die Eigenvektoren auf zwei Unterraummatrizen verteilt: zum einen in die Signal Unterraummatrix S, die aus den Eigenvektoren mit den größeren Eigenwerten gebildet wird, und die Unterraummatrix G, die aus den Eigenvektoren mit den kleineren Eigenwerten als Spaltenvektoren zusammengesetzt wird. Das so genannte MUSIC-Pseudo-Spektrum $S_{MUSIC}$ wird nach folgender Formel berechnet:

$$S_{MUSIC} = \frac{1}{a * (\omega)GG * \dot{a}(\omega)};$$

a(ω) ist ein Spaltenvektor, der sich aus den Werten einer gleichmäßig abgetasteten komplexen Sinusschwingung mit der Frequenz w zusammensetzt. Das Symbol * zeigt an, dass es sich um die komplex konjugierte transponierte Matrix handelt.

Aus der Autokovarianzmatrix lässt sich ein Kriterium ableiten, das zur Unterscheidung zwischen Ein- und Mehrzielsituationen benutzt werden kann. Dies wird im Folgenden als Eigenwertmethode bezeichnet.

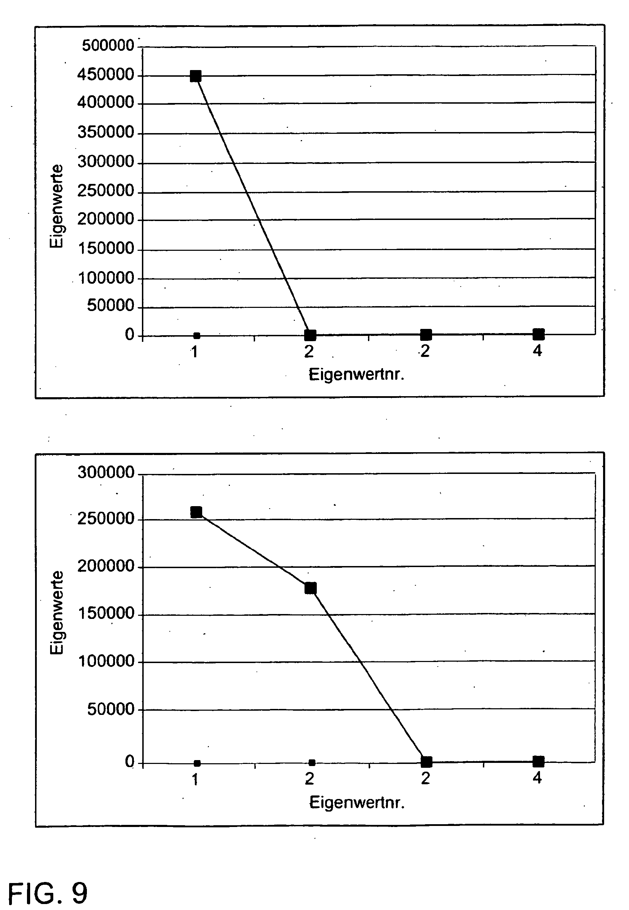

Bei der Eigenwertmethode werden die Autokovarianzmatrix der räumlichen Abtastwerte und die Eigenwerte dieser Autokovarianzmatrix berechnet. Gibt es mehr als einen "großen" Eigenwert, dann ist dies ein indikator für eine Mehrzielsituation. In Fig. 9 sind verschiedene Eigenwertverteilungen der Autokovarianzmatrix gezeigt. Auf der linken Seite ist die Matrix für eine Einzielsituation mit einem Ziel bei 0° gezeigt, auf der rechten Seite ist eine Zweizielsituation gezeigt mit Zielen bei 3° und -5°. Als Unterscheidungskriterium für die Einziel- und die Zweizielsituation wird das Verhältnis zu den Steigungen zwischen den Eigenwerten 2 und 3 und 1 und 2 verwendet. Falls beispielsweise

$$\frac{\Delta EW23}{\Delta EW12} > 1$$

ist, liegt eine Zwei- oder Mehrzielsituation vor, falls beispielsweise

$$\frac{\Delta EW23}{\Delta EW12} \leq 1$$

ist, liegt eine Einzielsituation vor.

Um eine weitere Unterscheidung zwischen einer Einzielsituation und einer Mehrzielsituation zu erhalten, wurde die in den Fig: 1 und 2 gezeigte Antennenanordnung mit vier Empfangsantennen 2 bis 5 modelliert. Das empfangene abgemischte und tiefpassgefilterte Signal wurde für Ein- und Mehrzielsituationen gewonnen und Weißes Gauss'sches Rauschen aufaddiert.

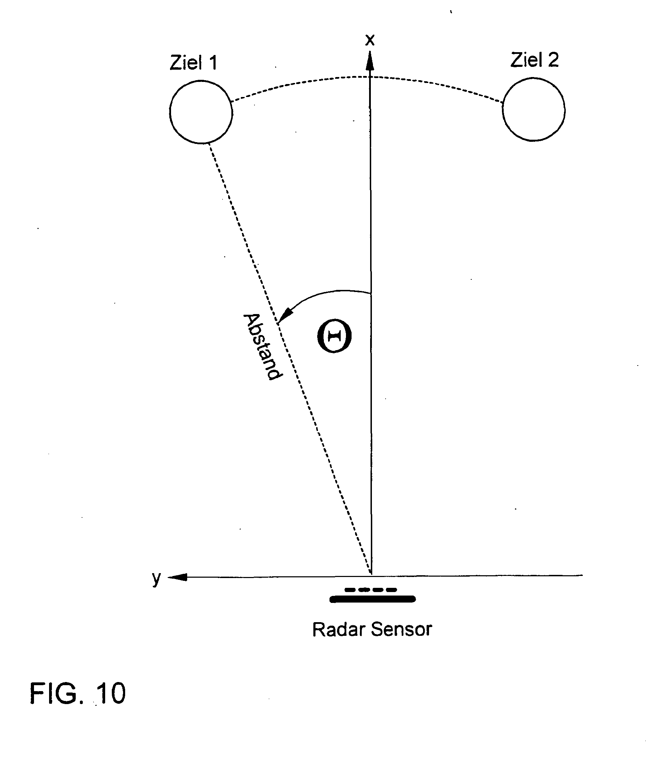

Bei Einzietsituationen wurde beobachtet, dass sich über die vier Empfangsantennen 2 bis 5 eine räumliche Welle ergibt. Für positive (negative) Einfallswinkel θ wandert diese Welle über der Zeit in negative (positive) y-Richtung, vgl. dazu Fig. 10. Im Allgemeinen, das heißt in Ein- oder Mehrzielsituationen, gilt, dass die an den einzelnen Antennen 2 bis 5 gemessene' Frequenz die gleiche ist. Zusätzlich gilt im Falle von Einzielsituationen, dass die Amplituden an den vier Antennen 2 bis 5 gleich sind, wie auch die Phasendifferenzen zwischen benachbarten Antennen 2 bis 5 gleich sind.

In Zweizielsituationen ist die Phasendifferenz zwischen benachbarten Antennen 2 bis 5 im Allgemeinen nicht gleich, wie auch die Amplitude an den vier Antennen 2 bis 5 eine unterschiedliche ist. Diese Eigenschaft kann ausgenutzt werden, um zwischen Ein- und Mehrzielsituationen zu unterscheiden.

Hieraus ergeben sich zwei weitere Kriterien, die zur Unterscheidung zwischen Ein- und Mehrzielsituationen benutzt werden können: Zusätzlich zur vorstehend dargestellten Eigenwertmethode ergeben sich die Amplitudendifferenzvarianzmethode und die Phasendifferenzvarianzmethode.

Bei der Amplitudendifferenzvarianzmethode wird die Differenz der Amplitudenwerte benachbarter Antennen betrachtet: In Einzielsituationen ist die Differenz der Amplitudenwerte benachbarter Antennen gleich. In Mehrzielsifuationen gibt es Effekte konstruktiver und destruktiver Interferenz, welche zu höheren Varianzwerten führen.

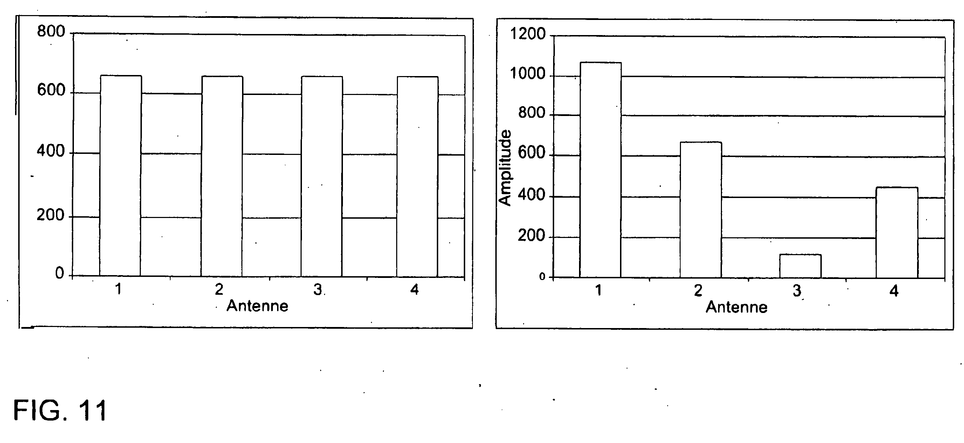

In Fig. 11 sind die Amplituden der einzelnen Empfangsantennen für verschiedene Situation gezeigt. Links ist erneut eine Einzielsituation mit einem Ziel bei 0° gezeigt, rechts ist eine Zweizielsituation mit Zielen bei 3° und -5° gezeigt. Es zeigt sich, dass bei einer Einzielsituation die Amplituden aller vier Antennen gleich sind. Bei der Zweizielsituation hingegen unterscheiden sich die Amplituden der Antennen 2 bis 5 aufgrund konstruktiver und destruktiver Interferenz. Als Unterscheidurigskriterium für die Einziel- bzw. Zweizielsituation eignet sich somit die Varianz der Amplitudendifferenz benachbarter Antennen 2 bis 5.

Bei der Phasendifferenzvarianzmethode wird die Differenz der Phasen benachbarter Antennen 2 bis 5 betrachtet: Ähnlich wie bei der Amplitudendifferenzvarianzmethode ist die erhöhte Varianz der Phasendifferenzwerte benachbarter Antennen 2 bis 5 ein Indikator für eine Mehrzielsituation.

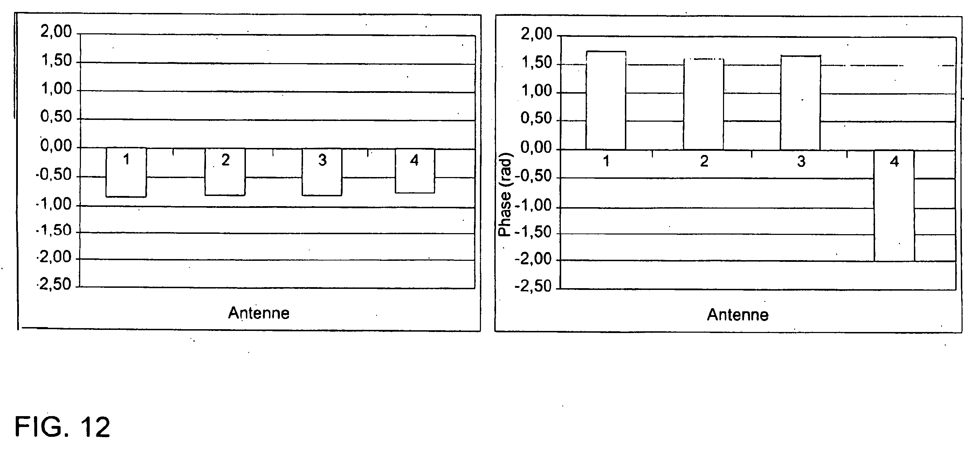

In Fig. 12 sind die Phasen der einzelnen Empfangsantennen 2 bis 5 in verschiedenen Situationen gezeigt. Erneut ist links die Einzielsituation mit einem Ziel bei 0° gezeigt und rechts eine Zweizielsituation mit Zielen bei 3° und -5°. Es zeigt sich, dass die Phasen der vier Antennen 2 bis 5 in den Einzielsituationen jeweils gleich sind. Bei der Zweizielsituation unterscheidet sich insbesondere die Phase der vierten Empfangsantenne 5 deutlich von den Phasen der ersten drei Empfangsantennen 2 bis 4. Die Varianz der Phasendifferenz benachbarter Antennen 2 bis 5 kann somit als Unterscheidungskriterium für eine Einziel- bzw. eine Zweiziel- oder Mehrzielsituation dienen.

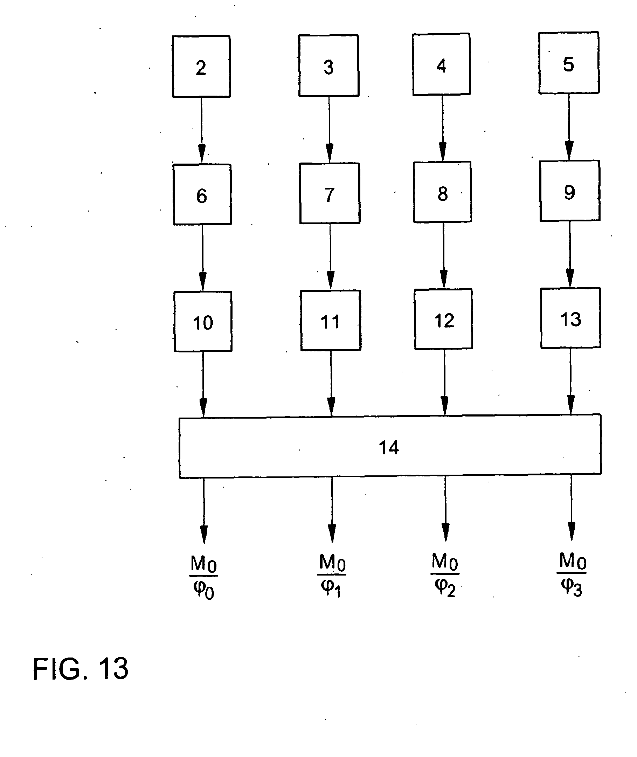

Anhand von Fig. 13 wird ein weiteres Verfahren zur Unterscheidung zwischen einer Einzielsituation und einer Mehrzielsituation erläutert. Die Signale der vier Empfangsantennen 2 bis 5 werden über Analog-Digital-Umsetzer 6 bis 9 digitalisiert und danach mittels der Einheiten 10 bis 13 einer Fast-Fourier-Transformation unterzogen. Auf diese Weise erhält man beispielsweise für jede der Empfangsantennen 2 bis 5 aus den 512 Eingangswerten im Zeitbereich 512 Ausgangswerte im Frequenzspektrum. Diese Frequenzspektren werden auf Maxima untersucht. Gemäß einer Ausgestaltung werden die Frequenzspekiren der einzelnen Antennen 2 bis 5 einzeln auf ein Maximum untersucht. Gemäß einer anderen Ausgestaltung werden die Frequenzspektren der vier Empfangsantennen 2 bis 5 miteinander kombiniert und bei dem sich ergebenden Kombinationsspektrum wird das Maximum bestimmt. Bei dem Frequenzwert des Maximums bestimmt man die zugehörigen Frequenzen der Frequenzspektren der einzelnen Antennen 2 bis 5 nach den Fast-Fourier-Transformationen. Man erhält auf diese Weise vier Werte, die mittels der Transformationseinheit 14 erneut einer Fast-Fourier-Transformation unterzogen werden. Dies entspricht einer Fast-Fourier-Transformation in einer Entfernungs- und Geschwindigkeitszelle. Als Ausgangsspektrum der Transformationseinheit 14 erhält man vier komplexe Frequenzwerte. Von diesen vier Frequenzwerten bestimmt man erneut das Maximum, da bei diesem Wert eine Zielsituation vorliegt. Um nun zu bestimmen, ob eine Einziel- oder eine Mehrzielsituation vorliegt, ermittelt man die vier Phasen der Empfangsantennen 2 bis 5, die zu dem Maximalwert der zweiten Fast-Fourier-Transformation gehören. Sind alle vier Phasen der Empfangsantennen 2 bis 5 bei diesem Maximalwert gleich, liegt eine Einzielsituation vor. Falls sich zumindest eine Phase einer Antenne von den Phasen der anderen Antennen bei diesem Maximalwert unterscheidet, liegt eine Mehrzielsituation vor.

Jede der vier hier vorgestellten Methoden zur Unterscheidung zwischen Ein- und Mehrzielsituationen hat ihre eigene Charakteristik, welche kombiniert werden können, um eine zuverlässige Aussage über das Vorhandensein einer Mehrzielsituation zu treffen.

Im Falle von Einzielsituationen ist es nicht notwendig, den rechenaufwendigen hochauflösenden Algorithmus auszuführen; hingegen kann man den Zielwinkel mittels der einfachen Phasenmonopulstechnik bestimmen. Im Falle von Mehrzielsituationen kann jedoch ein hochauflösender Algorithmus zur Winkelauflösung der Ziele verwendet werden. Beispielsweise kann das vorstehend erläuterte MUSIC (MUltiple Signal Classification) Verfahren verwendet werden.

In der realen automotiven Welt kommen Mehrzielsituationen innerhalb einer Zelle nicht sehr häufig vor, d.h. in viel weniger als in 10% der gemachten Messungen. Die verfügbare Rechenleistung ist begrenzt, und deshalb ist es sehr vorteilhaft, im Voraus zu bewerten, ob eine Mehrzielsituafion vorliegt oder eben nicht

In Fig. 10 ist der Radarsensor an der Position (x=0, y=0) eingezeichnet. Die zwei Ziele befinden sich in der gleichen radialen Distanz zum Radarsensor jeweils in bestimmten Winkeln $\Theta$. Es wurde festgestellt, dass für Einzielsituationen nur ein sehr kleines Signal zu Rausch Verhältnis [SNR] (0-dB) notwendig ist, um Ziele sehr genau in ihrer Winkelposition zu bestimmen (Varianz < 1°). In Zweizielsituationen ist ein deutlich höheres SNR notwendig, um die beiden Objekte aufzulösen.

Zusammenfassend kann festgestellt werden, dass es mittels eines hochauflösenden DOA Radarsensors mit vier Empfangsantennen 2 bis 5 möglich ist, zu bewerten, ob es sich um eine Ein- oder Mehrzielsituation handelt. Dazu werden die Phasen- und Amplitudenwerteverteilungen an den vier Empfangsantennen 2 bis 5 betrachtet und/oder die Eigenwertverteilung der Autokovarianzmatrix der räumlichen Signale.

**Patentansprüche**

1.  Verfahren zur Erfassung mindestens eines Objekts in der Umgebung eines Kraftfahrzeugs, bei dem an Hand von räumlichen Abtastwerten von mehr als zwei Empfangsantennen (2 bis 5) bestimmt wird, ob eine Einzielsituation oder eine Mehrzielsituation vorliegt, und danach eine Zielwinkelbestimmung durchgeführt wird, die davon abhängt, ob eine Einzielsituation oder eine Mehrzielsituation vorliegt, wobei bei einer Einzielsituation der Zielwinkel mittels Phasenmonopulstechnik bestimmt wird und bei einer Mehrzieisituation die Zielwinkei mittels eines hochauflösenden Algorithmus bestimmt werden, wobei ein frequenzmoduliertes Sendesignal mit mindestens zwei verwobenen frequenzmodulierten Signalen, insbesondere ein LFMSK (Linear Frequency Modulated Shift Keying)-Sendesignal, ausgestrahlt wird,
**dadurch gekennzeichnet,**
**dass** die Abtastwerte von jeder Empfangsantenne (2 bis 5) in das Frequenzspektrum abgebildet werden, dass ein Maximalwert eines Frequenzspektrums einer Empfangsantenne (2 bis 5) oder ein Maximalwert einer Kombination der Frequenzspektren der Empfangsantennen (2 bis 5) bestimmt wird, dass die Werte bei den Frequenzen der Frequenzspektren der Empfangsantennen (2 bis 5), die dem Frequenzwert des Maximalwerts zugehörig sind, einer Fast-Fourier-Transformation unterzogen werden und anhand eines Vergleichs der Phasen der Empfangsantennen (2 bis 5) bei einem Maximalwert des sich aus der Fast-Fourier-Transformation ergebenden Spektrums bestimmt wird, ob eine Einzelsituation oder eine Mehrzielsituation vorliegt.

2. Verfahren nach Anspruch 1,
**dadurch gekennzeichnet,**
**dass** die Abtastwerte von jeder Empfangsantenne (2 bis 5) ins Frequenzspektrum abgebildet werden, so dass jeder diskrete Wert im Frequenzspektrum eine Entfernungs-/Geschwindigkeitszelle repräsentiert, und die Spitzen an einem diskreten Wert im Frequenzspektrum als Indikator für ein oder mehrere Ziele in der zugehörigen Entfernungs-/Geschwindigkeitszelle verwendet werden und für die Ziele in dieser Entfernungs-/Geschwindigkeitszelle bestimmt wird, ob eine Einzelsituation oder eine Mehrzielsituation vorliegt.

3. Verfahren nach Anspruch 1 oder 2,
**dadurch gekennzeichnet,**
**dass** zu der Unterscheidung zwischen einer Einzielsituation und einer Mehrzielsituation zusätzlich die Differenz der Amplitudenwerte benachbarter Empfangsantennen bestimmt wird und auf eine Einzelsituation geschlossen wird, wenn die Differenzen jeweils gleich sind, und bei höheren Varianzwerten auf eine Mehrzielsituation geschlossen wird.

4. Verfahren nach einem der vorstehenden Ansprüche,
**dadurch gekennzeichnet,**
**dass** zu der Unterscheidung zwischen einer Einzelsituation und einer Mehrzielsituation zusätzlich die Differenz der Phasenwerte benachbarter Empfangsantennen bestimmt wird und auf eine Einzelsituation geschlossen wird, wenn die Differenzen jeweils gleich sind, und bei höheren Varianzwerten auf eine Mehrzielsituation geschlossen wird.

5. Verfahren nach einem der vorstehenden Ansprüche,
**dadurch gekennzeichnet,**
**dass** die Autokovarianzmatrix der räumlichen Abtastwerte der Empfangsantennen (2 bis 5) und die Eigenwerte dieser Autokovarianzmatrix berechnet werden und zusätzlich an Hand der Größe der Eigenwerte zwischen einer Einzielsituation und einer Mehrzielsituation unterschieden wird.

6. Verfahren nach einen vorherigen Anspruch,
**dadurch gekennzeichnet,**
**dass** der bei der Mehrzielsituation verwendete hochauflösende Algorithmus das MUSIC (MUltiple Signal Classification)-Verfahren ist.

7. Vorrichtung zur Erfassung mindestens eines Objekts in der Umgebung eines Kraftfahrzeugs zur Durchführung des Verfahrens nach einem der Ansprüche 1 bis 6, wobei die Vorrichtung einen Radarsensor umfasst, der eine Sendeantenne (1) und vier Empfangsantennen (2 bis 5) aufweist.

8. Vorrichtung nach Anspruch 7,
**dadurch gekennzeichnet,**
**dass** die Sendeantenne (1) und die Empfangsantennen (2 bis 5) auf einem planaren Substrat angeordnet sind.

9. Vorrichtung nach Anspruch 8,
**dadurch gekennzeichnet,**
**dass** die Größe des planaren Substrats geringer als 100 cm$^2$ ist.

10. Vorrichtung nach einem der Ansprüche 7 bis 9,
**dadurch gekennzeichnet,**
**dass** eine Empfangsantenne (2 bis 5) in einer Matrix aus 2 x 8 Elementen gebildet ist.

11. Vorrichtung nach einem der Ansprüche 7 bis 10,
**dadurch gekennzeichnet,**
**dass** mit der Sendeantenne (1) ein frequenzmoduliertes Sendesignal emittierbar ist, in dem mindestens zwei verwobene frequenzmodulierte Signale enthalten sind.

**Claims**

1. Method for detecting at least one object in the environment of a motor vehicle, in which it is determined with the aid of three-dimensional sample values from more than two receiving antennas (2 to 5) whether a single-target situation or a multiple-target situation exists, and thereafter a determination of target angle is carried out which depends on whether a single-target situation or a multiple-target situation exists, in the event of a single-target situation the target angle being determined by means of the phase monopulse technique, and in the event of a multiple-target situation the target angles being determined by means of a high-resolution algorithm, there being emitted a frequency-modulated transmit signal with at least two interlaced frequency-modulated signals, in particular an LFMSK (Linear Frequency Modulated Shift Keying) transmit signal, **characterized in that** the sample values of each receiving antenna (2 to 5) is mapped into the frequency spectrum, **in that** a maximum value of a frequency spectrum of a receiving antenna (2 to 5) or a maximum value of a combination of the frequency spectra of the receiving antennas (2 to 5) is determined, and **in that** the values for the frequencies of the frequency spectra of the receiving antennas (2 to 5), which are associated with the frequency value of the maximum value, are subjected to a fast Fourier transformation, and it is determined whether a single-target situation or a multiple-target situation exists with the aid of a comparison of the phases of the receiving antennas (2 to 5) for a maximum value of the spectrum resulting from the fast Fourier transformation.

2. Method according to Claim 1, **characterized in that** the sample values are mapped from each receiving antenna (2 to 5) into the frequency spectrum such that each discrete value in the frequency spectrum represents a range/speed resolution cell, and the peaks at a discrete value in the frequency spectrum are used as an indicator for one or more targets in the associated range/speed resolution cell, and whether a single-target situation or a multiple-target situation exists is determined for the targets in said range/speed resolution cell.

3. Method according to Claim 1 or 2, **characterized in that** in addition the difference between the amplitude values of adjacent receiving antennas is determined in order to distinguish between a single-target situation and a multiple-target situation, and a single-target situation is inferred when the differences are respectively equal, and a multiple-target situation is inferred in the event of relatively high variance values.

4. Method according to one of the preceding claims, **characterized in that** in addition the difference between the phase values of adjacent receiving antennas is determined in order to distinguish between a single-target situation and a multiple-target situation, and a single-target situation is inferred when the differences are respectively equal, and a multiple-target situation is inferred in the event of relatively high variance values.

5. Method according to one of the preceding claims, **characterized in that** the autocovariance matrix of the three-dimensional sample values of the receiving antennas (2 to 5) and the eigenvalues of said autocovariance matrix are calculated and, in addition, a distinction is made between a single-target situation and a multiple-target situation with the aid of the magnitude of the eigenvalues.

6. Method according to any preceding claim, **characterized in that** the high-resolution algorithm used in the event of the multiple-target situation is the MUSIC (MUltiple Signal Classification) method.

7. Device for detecting at least one object in the environment of a motor vehicle in order to carry out the method according to one of Claims 1 to 6, in which the device comprises a radar sensor which has one transmitting antenna (1) and four receiving antennas (2 to 5).

8. Device according to Claim 7, **characterized in that** the transmitting antenna (1) and the receiving antennas (2 to 5) are arranged on a planar substrate.

9. Device according to Claim 8, **characterized in that** the size of the planar substrate is less than 100 cm$^2$.

10. Device according to one of Claims 7 to 9, **characterized in that** a receiving antenna (2 to 5) is formed in a matrix of $2 \times 8$ elements.

11. Device according to one of Claims 7 to 10, **characterized in that** the transmitting antenna (1) can be used to emit a frequency-modulated transmit signal in which at least two interlaced frequency-modulated signals are included.

## Revendications

1. Procédé de détection d'au moins un objet dans l'environnement d'un véhicule automobile, dans lequel à l'aide de valeurs d'échantillonnage spatiales de plus de deux antennes réceptrices (2 à 5), on détermine si la situation qui prévaut présente une ou plusieurs cibles,
la détermination d'un angle cible est ensuite réalisée selon que la situation qui prévaut présente une ou plusieurs cibles,
au cas où la situation qui prévaut présente une cible, l'angle cible est déterminé par une technique de phase à monopulsation et
au cas où la situation qui prévaut présente plusieurs cibles, l'angle cible est déterminé au moyen d'un algorithme à haute résolution,
un signal d'émission à fréquence modulée présentant au moins deux signaux à fréquence modulée convolués, notamment un signal d'émission LFMSK ("Linear Frequency Modulated Shift Keying"), étant émis,
**caractérisé en ce que**

les valeurs d'échantillonnage de chaque antenne réceptrice (2 à 5) sont représentées dans un spectre de fréquences,

**en ce qu'**une valeur maximale d'un spectre de fréquences d'une antenne réceptrice (2 à 5) ou une valeur maximale d'une combinaison des spectres de fréquences des antennes réceptrices (2 à 5) est déterminée,

**en ce que** les valeurs pour les fréquences des spectres de fréquence des antennes réceptrices (2 à 5) qui sont associées à la valeur de la fréquence de la valeur maximale subissent une transformation rapide de Fourier et

**en ce que** pour une valeur maximale du spectre qui résulte de la transformation rapide de Fourier, le procédé détermine à l'aide d'une comparaison des phases des antennes réceptrices (2 à 5) si la situation qui prévaut présente une cible ou plusieurs cibles.

2. Procédé selon la revendication 1, **caractérisé en ce que** les valeurs d'échantillonnage de chaque antenne réceptrice (2 à 5) sont transformées en un spectre de fréquencess de telle sorte que chaque valeur distincte du spectre de fréquencess représente une cellule de distance/vitesse, **en ce que** les pics présents pour une valeur distincte du spectre de fréquences sont utilisés comme indicateur de la présence d'une ou de plusieurs cibles dans la cellule associée de distance/vitesse et **en ce que** le procédé détermine si la situation qui prévaut présente une ou plusieurs cibles pour les cibles situées dans cette cellule de distance/vitesse.

3. Procédé selon les revendications 1 ou 2, **caractérisé en ce que** la différence entre les valeurs d'amplitude des antennes réceptrices voisines est en plus déterminée pour faire la distinction entre une situation à une cible et une situation à plusieurs cibles et **en ce que** le procédé conclut à la présence d'une situation à une cible si les différences sont égales et à une situation à plusieurs cibles si les valeurs de variance sont plus élevées.

4. Procédé selon l'une des revendications précédentes, **caractérisé en ce que** la différence entre les valeurs de phase des antennes réceptrices voisines est en plus déterminée pour faire la distinction entre une situation à une cible et une situation à plusieurs cibles et **en ce que** le procédé conclut à la présence d'une situation à une cible si les différences sont égales et à une situation à plusieurs cibles si les valeurs de variance sont plus élevées.

5. Procédé selon l'une des revendications précédentes, **caractérisé en ce que** la matrice d'auto-covariance des valeurs d'échantillonnage spatiales des antennes réceptrices (2 à 5) et les valeurs propres de cette matrice d'auto-covariance sont calculées et **en ce que** la distinction entre une situation à une cible et une situation à plusieurs cibles est de plus faite à l'aide du niveau des valeurs propres.

6. Procédé selon la revendication précédente, **caractérisé en ce que** l'algorithme à haute résolution utilisé dans la situation à plusieurs cibles est le procédé MUSIC ("Multiple Signal Classification" - classement de plusieurs signaux).

7. Dispositif de détection d'au moins un objet dans l'environnement d'un véhicule automobile en vue de l'exécution du procédé selon l'une des revendications 1 à 6, le dispositif comportant un capteur radar qui présente une antenne émettrice (1) et quatre antennes réceptrices (2 à 5).

8. Dispositif selon la revendication 7, **caractérisé en ce que** l'antenne émettrice (1) et les antennes réceptrices (2 à 5) sont disposées sur un substrat plan.

9. Dispositif selon la revendication 8, **caractérisé en ce que** la taille du substrat plan est inférieure à 100 cm$^2$.

10. Dispositif selon l'une des revendications 7 à 9, **caractérisé en ce qu'**une antenne réceptrice (2 à 5) est configurée en matrice de 2 x 8 éléments.

11. Dispositif selon l'une des revendications 7 à 10, **caractérisé en ce que** l'antenne émettrice (1) peut émettre un signal d'émission à fréquence modulée qui contient au moins deux signaux à fréquence modulée convolués.

FIG. 1

FIG. 2

FIG. 3

H-Ebene

E-Ebene

FIG. 4

E-Ebene

H-Ebene

FIG. 5

FIG. 6

FIG. 7

Antennenelemente

räumlicher
Schnappschuss

Zeitsignal

Amplitude

FIG. 8

FIG. 9

FIG. 10

FIG. 11

EP 2 005 209 B1

FIG. 12

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004044073 A1
- EP 1580572 A1
- US 20060028375 A1
- US 20010015698 A1
- US 6498581 B1